# EUROPÄISCHE PATENTSCHRIFT

(11) **EP 1 178 866 B1**
(45) Veröffentlichungstag und Bekanntmachung des Hinweises auf die Patenterteilung: **25.06.2003**
(21) Anmeldenummer: 00931197.8
(22) Anmeldetag: 11.05.2000
(51) Int. Cl.: B23B 31/02

(54) **SPANNFUTTER ZUM SPANNEN VON WERKZEUGEN DURCH SCHRUMPFSITZ**
CLAMPING CHUCK FOR CLAMPING TOOLS BY SHRINK-FIT
MANDRIN DE SERRAGE DESTINE AU SERRAGE D'OUTILS PAR BLOCAGE PAR RETRAIT

(30) Priorität: 20.05.1999 DE 19923164
(43) Veröffentlichungstag der Anmeldung: 13.02.2002
(73) Patentinhaber: Schunk GmbH & Co. KG Fabrik für Spann- und Greifwerkzeuge, 74348 Lauffen (DE)
(72) Erfinder: RETZBACH, Thomas, D-74357 Bönnigheim (DE)
(74) Vertreter: Paul, Dieter-Alfred, Dipl.-Ing.
(86) Internationale Anmeldenummer: EP0004287
(87) Internationale Veröffentlichungsnummer: WO00071286

(56) Entgegenhaltungen:
- US-A- 5 311 654
- PATENT ABSTRACTS OF JAPAN vol. 012, no. 208 (M-709), 15. Juni 1988 (1988-06-15) & JP 63 011242 A (TECH RES ASSOC HIGHLY RELIAB MARINE PROPUL PLANT), 18. Januar 1988 (1988-01-18)

## Beschreibung

Die vorliegende Erfindung betrifft ein Spannfutter zum Spannen von Werkzeugen durch Schrumpfsitz mit einem an einer Arbeitsspindel einer Werkzeugmaschine fixierbaren Futterkörper, in dem eine zentrale Aufnahme für den Schaft eines zu spannenden Werkzeugs ausgebildet ist.

Die US-A- 5 311 654 offenbart ein derartiges Spannfutter.

Spannfutter dieser Art sind in unterschiedlichen Ausführungsformen bekannt und dienen dazu, einen Werkzeugschaft wie beispielsweise einen Bohrer- oder Fräserschaft in der Arbeitsspindel einer entsprechenden Werkzeugmaschine zu fixieren. Sie werden insbesondere eingesetzt, um kleine Werkzeuge zu fixieren.

Die herkömmlichen Spannfutter zum Spannen von Werkzeugen durch Schrumpfsitz bestehen in der Regel aus einem Futterkörper aus Metall, der an der Arbeitsspindel der jeweiligen Werkzeugmaschine fixierbar ist und eine zentrale Aufnahme für den Schaft eines zu spannenden Werkzeugs aufweist. Der Durchmesser der Aufnahme ist dabei so bestimmt, daß er etwas kleiner ist als der Durchmesser des Werkzeugschafts. Zum Spannen des Werkzeuges wird der Futterkörper zumindest im Bereich der Aufnahme erwärmt, bis sich die Aufnahme soweit thermisch gedehnt hat, daß der Werkzeugschaft eingesetzt werden kann. Beim anschließenden Abkühlen schrumpft die Aufnahme wieder, so daß der Werkzeugschaft in der Aufnahme durch Preß- oder Schrumpfsitz fixiert wird.

Solche sogenannten Wärmeschrumpffutter haben sich durchaus bewährt. Als nachteilig wird jedoch angesehen, daß die Position des Werkzeugs in der Aufnahme nicht definiert vorgegeben werden kann, da sich die Relativposition zwischen Werkstück und Aufnahme während des Abkühlens des Futterkörpers und des damit verbundenen Schrumpfvorgangs ändern kann. Insbesondere kann nicht gewährleistet werden, daß der Werkzeugkopf wie beispielsweise der Fräs- oder Reibahlenkopf in gewünschter Weise an der Stirnfläche des Futterkörpers anliegt, um im Betrieb eine Abstützung zu erfahren. Aus diesem Grund sind die Standzeiten der Werkzeuge zum Teil nicht ausreichend.

Aufgabe der Erfindung ist es daher, ein Spannfutter der eingangs genannten Art so auszubilden, daß eine Plananlage des Werkzeuges am Futterkörper gewährleistet ist.

Diese Aufgabe ist erfindungsgemäß dadurch gelöst, daß der Futterkörper einen die Aufnahme bildenden Werkzeughalter und ein den Werkzeughalter zumindest bereichsweise umgebendes und stirnseitig eine Anlagefläche für das Werkzeug aufweisendes Anschlagelement umfaßt, wobei der Werkzeughalter und das Anschlagelement in axialem Abstand von der Anlagefläche miteinander verbunden sind und zumindest zum Teil aus Materialien mit unterschiedlichen Wärmeausdehnungskoeffizienten bestehen derart, daß bei einer Temperaturänderung, welche zu einer Aufweitung der Aufnahme führt, der Werkzeughalter stärker als das Anschlagelement gedehnt wird.

Erfindungsgemäß ist der Futterkörper somit mehrteilig ausgebildet, wobei sich der Werkzeughalter bei Temperaturänderungen stärker dehnen und zusammenziehen kann als das Anschlagelement. Hierdurch wird erreicht, daß sich- im Falle einer Verwendung von herkömmlichen Materialien wie beispielsweise Metallen - bei einer Erwärmung des Futterkörpers und der damit verbundenen Aufweitung der Aufnahme der Werkzeughalter axial stärker als das Anschlagelement dehnt. Da das Anschlagelement mit dem Werkzeughalter beabstandet von der Anlagefläche fest verbunden ist, wird diese stärkere axiale Dehnung dazu führen, daß der Werkzeughalter aus dem Anschlagelement herausgedrückt wird und in umgekehrter Weise bei einem Abkühlen wieder in das Anschlagelement axial hineingezogen wird. Durch diesen Rückzugseffekt wird beim Abkühlen erreicht, daß das in die Aufnahme eingesetzte und darin fixierte Werkzeug gegen die Anlagefläche des Anschlagelements gezogen wird. Im Ergebnis ist eine exakte Positionierung des Werkzeugs im Futterkörper und eine Abstützung des Werkzeugkopfes durch die Anlage am Anschlagelement im Betrieb gewährleistet mit der Folge, daß die Werkzeugstandzeit sowie die Rundlaufgenauigkeit des Werkzeugs deutlich verbessert werden können.

Wenn konventionelle Materialien wie beispielsweise Metalle verwendet werden, ist es zur Erzielung des zuvor beschriebenen Effekts erforderlich, daß der Werkzeughalter zumindest bereichsweise einen größeren Wärmeausdehnungskoeffizienten als das Material des Anschlagelements besitzt. Beispielsweise kann der Werkzeughalter im wesentlichen aus Aluminium und das Anschlagelement im wesentlichen aus Stahl bestehen. Alternativ ist natürlich auch der Einsatz von Memory-Materialien denkbar. In diesem Fall sind die Materialpaarungen jeweils so zu wählen, daß der gewünschte Rückzugeffekt eintritt.

Gemäß einer Ausführungsform der Erfindung ist vorgesehen, daß das Anschlagelement einen mit der Arbeitsspindel verbindbaren Grundkörper bildet, wobei dann der Werkzeughalter in das Anschlagelement von der die Anlagefläche aufweisenden Stirnseite her eingesetzt ist. Der Werkzeughalter kann beispielsweise in das Anschlagelement eingeschraubt sein, um die erforderliche Verbindung herzustellen. Eine Lötverbindung oder dergleichen ist aber auch denkbar. Ebenso können Anschlagelement und Werkzeughalter auch einteilig ausgebildet, beispielsweise in einem Gießverfahren hergestellt sein.

In Ausbildung dieser Ausführungsform kann weiterhin vorgesehen sein, daß der Werkzeughalter axial unterteilt ist und ein die Aufnahme bildendes erstes Element aus einem Material, das im wesentlichen den gleichen Wärmeausdehnungskoeffizienten wie das Material des Anschlagelements besitzt, und ein damit verbundenes zweites Element, dessen Wärmeausdehnungskoeffizient größer als der des Anschlagelements ist, umfaßt. Diese mehrteilige Ausgestaltung des Werkzeughalters hat den Vorteil, daß im Bereich der Aufnahme Werkzeughalter und Anschlagelement ein gleiches Wärmedehnungsverhalten zeigen und entsprechend genau dimensioniert werden können.

Gemäß einer weiteren Ausführungsform der Erfindung kann auch vorgesehen sein, daß der Werkzeughalter einen mit der Arbeitsspindel verbindbaren Grundkörper bildet, wobei dann das Anschlagelement auf den Werkzeughalter aufnahmeseitig aufgeschoben und mit diesem beispielsweise durch Löten oder Verschrauben verbunden ist.

Um Blockaden zwischen dem sich stärker dehnenden Material des Werkzeughalters und dem Anschlagelement zu vermeiden, kann es zweckmäßig sein, zwischen dem Anschlagelement und dem Werkzeughalter zumindest bereichsweise einen Dehnspalt vorzusehen, in welchen das Material des Werkzeughalters bei einer thermischen Aufweitung der Aufnahme ausweichen kann. Alternativ kann auch ein geeignetes Ausgleichsmaterial vorgesehen sein. Dies ist insbesondere bei einer einteiligen Ausführung von Werkzeughalter und Anschlagelement von Vorteil.

Schließlich ist gemäß einer bevorzugten Ausführungsform vorgesehen, daß der Werkzeughalter und das Anschlagelement derart zueinander positioniert und dimensioniert sind, daß die Stirnfläche der Aufnahme im Spannzustand hinter der Anlagefläche des Anschlagelements zurücksteht und im Werkzeugwechselzustand, in dem die Aufnahme aufgeweitet ist, über die Anschlagfläche hinaus steht. Dadurch, daß der Werkzeughalter im heißen Werkzeugwechselzustand über die Anlagefläche hinaus aus dem Aufnahmeelement hinausragt, wird erreicht, daß ein eingesetztes Werkzeug zuerst radial gespannt und dann erst zurückgezogen wird. Hierdurch werden optimale Rundlaufeigenschaften erzielt.

Hinsichtlich weiterer vorteilhafter Ausgestaltungen der Erfindung wird auf die Unteransprüche sowie die nachfolgende Beschreibung von Ausführungsbeispielen unter Bezugnahme auf die beiliegende Zeichnung verwiesen. In der Zeichnung zeigt
- Figur 1: im Längsschnitt eine Ausführungsform eines Spannfutters gemäß der vorliegenden Erfindung,
- Figur 2: das Spannfutter aus Figur 1 im erwärmten Zustand,
- Figur 3: das Spannfutter aus den Figuren 1 und 2 mit einem eingespannten Werkzeug,
- Figur 4: im Längsschnitt eine Variante des in den Figuren 1 bis 3 dargestellten Spannfutters mit eingespanntem Werkzeug und
- Figur 5: eine weitere Ausführungsform eines Spannfutters gemäß der vorliegenden Erfindung mit eingespanntem Werkzeug im Längsschnitt.

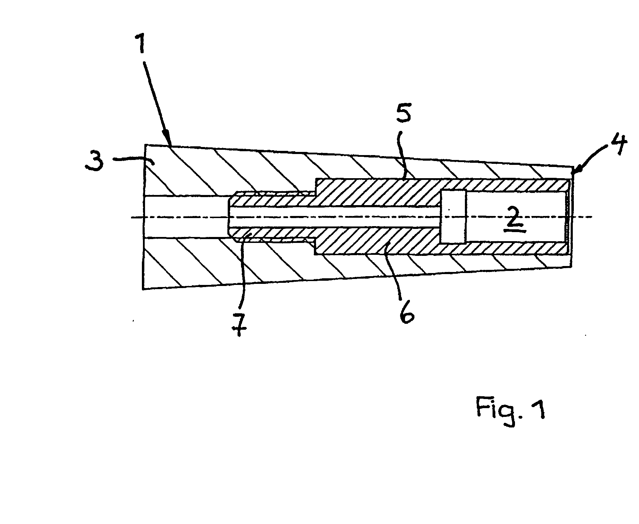

In den Figuren 1 bis 3 ist eine erste Ausführungsform eines Spannfutters zum Spannen von Werkzeugen durch Schrumpfsitz gemäß der vorliegenden Erfindung im Längsschnitt dargestellt. Das Spannfutter umfaßt einen Futterkörper 1 aus einem formsteifen Material, der an seinem einen Endbereich eine zentrale Aufnahme 2 aufweist, in die ein zylindrischer Schaft eines Werkzeugs W wie beispielsweise eines Bohrers oder Fräsers eingeschoben werden kann, und der an seinem anderen Endbereich in an sich bekannter Weise in eine drehangetriebene Arbeitsspindel einer Werkzeugmaschine einspannbar ist.

Der dargestellte Futterkörper 1 ist zweiteilig ausgebildet und besteht aus einem an der Arbeitsspindel fixierbaren Grundkörper 3, der an seiner werkzeugseitigen Stirnfläche eine Anlagefläche 4 für das Werkzeug W bildet und daher nachfolgend als Anschlagelement bezeichnet wird. In einer zentralen Aufnahmebohrung 5 des Anschlagelements 3 ist ein Werkzeughalter 6 angeordnet, der die Werkzeugaufnahme 2 bildet und in das Anschlagelement 3 von der die Anlagefläche 4 aufweisenden Stirnseite her eingeschoben ist. Der Werkzeughalter 6 weist an seinem maschinenseitigen Ende einen Gewindezapfen 7 auf, der in ein Innengewinde 9 des Anschlagelements 3 eingeschraubt ist, um den Werkzeughalter 6 in dem Anschlagelement 3 zu fixieren.

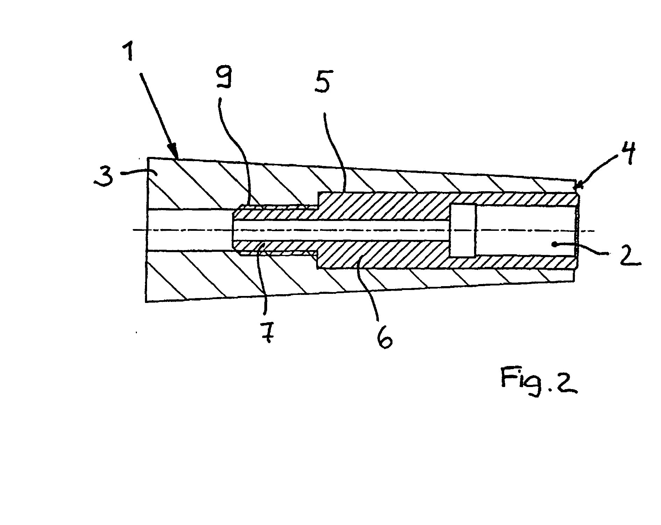

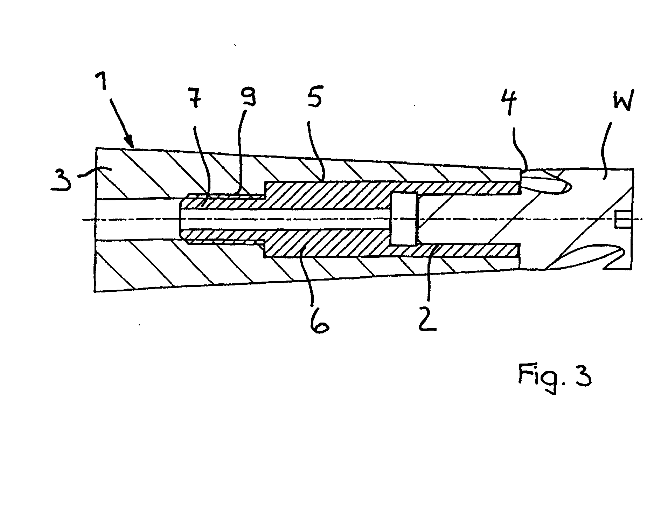

Gemäß der vorliegenden Erfindung besteht der Werkzeughalter 6 aus einem Material, das einen größeren Wärmeausdehnungskoeffizienten besitzt als das Material des Anschlagelements 3. Konkret besteht der Werkzeughalter 6 aus Aluminium und das Anschlagelement 3 aus Stahl. Durch die Verwendung von Materialien mit unterschiedlichen Wärmeausdehnungskoeffizienten wird erreicht, daß bei einer Erwärmung des Futterkörpers 1 der Werkzeughalter 6 stärker gedehnt wird als das Anschlagelement 3, so daß das werkzeugseitige Ende des Werkzeughalters 6 aus der Aufnahmebohrung 5 herausgedrückt wird, wie dies in Figur 2 erkennbar ist. Wenn jetzt ein Werkzeug W in die Aufnahme 2 eingesetzt wird und der Futterkörper 1 abkühlt, zieht sich der Werkzeughalter 6 auch wieder schneller zusammen als das Anschlagelement 3, wobei der Werkzeugschaft zunächst von dem Werkzeughalter 6 radial gespannt und dann gegen die Anschlagfläche 4 des Anlageelements 3 gezogen wird (Fig. 3). Durch diesen Rückzugeffekt wird eine vollständige Anlage des Werkzeugkopfes an dem Futterkörper 1 sichergestellt, wodurch sich die Steifigkeit der Anordnung Futterkörper/Werkzeug erhöht, die Vibrationsanfälligkeit gesenkt und damit die Standzeit deutlich verbessert wird.

Nicht gezeigt ist, das zwischen dem Werkzeughalter 6 und dem Anschlagelement 3 ein Ringspalt vorgesehen ist, um einen Raum zu schaffen, in den das sich stärker dehnende Material des Werkzeughalters 6 ausweichen kann.

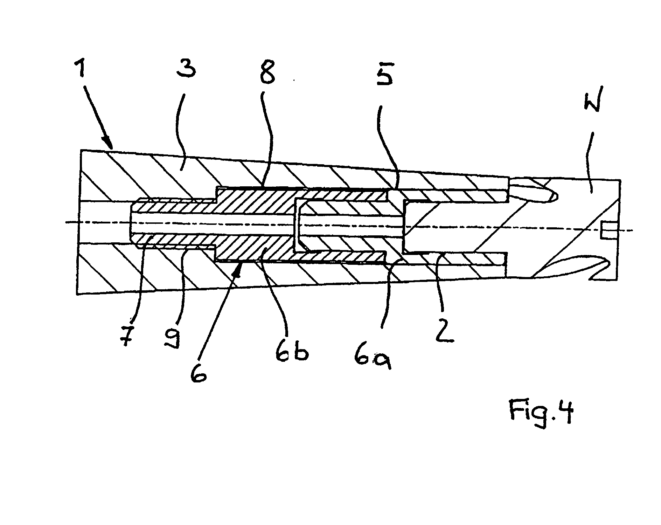

In Figur 4 ist ein Spannfutter dargestellt, das im wesentlichen dem Spannfutter aus den Figuren 1 bis 3 entspricht mit dem einzigen Unterschied, daß der Werkzeughalter 6 hier axial unterteilt ist in ein erstes Element 6a, das die Aufnahme 2 für das Werkzeug W bildet, und ein daran maschinenseitig anschließendes zweites Element 6b, das mit dem Anschlagelement 3 verschraubt ist. Die beiden Elemente 6a, 6b sind fest miteinander verbunden. Das erste Element 6a besteht genauso wie das Anschlagelement 3 aus Stahl, während das zweite Element 6b aus einem Material mit einem größeren Wärmeausdehnungskoeffizienten, nämlich Aluminium besteht. Wenn der Futterkörper 1 erwärmt wird, um ein Werkzeug W in die Aufnahme 2 einzusetzen oder daraus zu entfernen, dehnen sich das Anschlagelement 3 und das erste Element 6a des Werkzeughalters in gleichem Maße aus, während sich das zweite Element aus Aluminium stärker ausdehnt und somit das erste Element 6a aus der Aufnahmebohrung 5 des Anschlagelements 3 herausdrückt. Um die aufgrund der stärkeren thermischen Ausdehnung auftretende größere radiale Dehnung zu kompensieren, ist ein Dehnspalt 8 zwischen der Wandung der Aufnahmebohrung 5 und dem zweiten Element 6b vorgesehen, in welchen das Material des zweiten Elements 6b bei einer thermischen Dehnung ausweichen kann, so daß keine Blockaden auftreten können.

Die hier gewählte mehrteilige Ausführungsform des Werkzeughalters 6 hat den Vorteil, daß sich der Werkzeughalter im Bereich der Aufnahme 2 genauso verhält wie das Aufnahmeelement 3, so daß geringe Toleranzen erforderlich sind mit der Folge, daß hohe Rundlaufeigenschaften erzielbar sind.

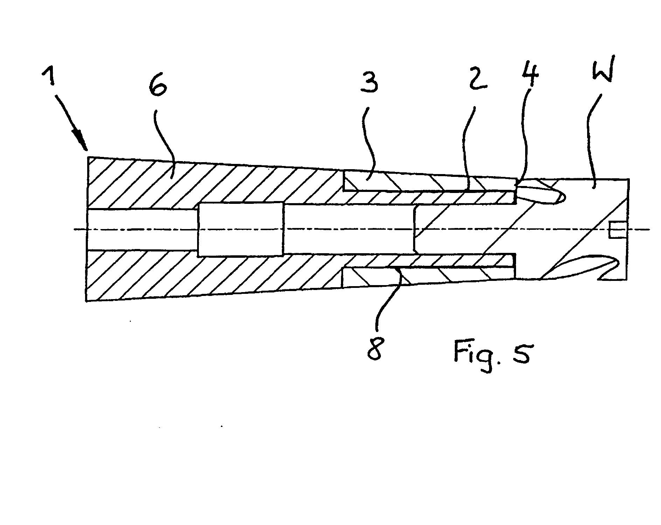

In Figur 5 ist eine dritte Ausführungsform eines Spannfutters gemäß der vorliegenden Erfindung dargestellt. Der Futterkörper 1 ist auch hier zweiteilig ausgebildet und umfaßt einen an der Arbeitsspindel einer Werkzeugmaschine fixierbaren Grundkörper, der auch die Aufnahme 2 für ein Werkzeug W bildet und daher nachfolgend als Werkzeughalter 6 bezeichnet wird. Zu dem Futterkörper 1 gehört weiterhin ein Anschlagelement 3, das im Bereich der Aufnahme 2 auf den Werkzeughalter 6 aufgeschoben ist und an seinem maschinenseitigen Ende mit dem Werkzeughalter 6 verlötet ist.

Bei dieser Ausführungsform besteht der Werkzeughalter 6 wie bei der ersten Ausführungsform aus einem Material, das einen größeren Wärmeausdehnungskoeffizienten als das Material des Anschlagelements 3 besitzt. Wenn somit der Futterkörper 1 erwärmt wird, um ein Werkzeug W in die Aufnahme 2 einzusetzen oder daraus zu entfernen, dehnt sich der Werkzeughalter 6 im Bereich der Aufnahme 2 stärker als das Anschlagelement 3, so daß die werkzeugseitige Stirnfläche des Werkzeughalters 6 gegenüber der Anlagefläche 4 des Anschlagelements 3 vorsteht. Wenn der Futterkörper 1 nach dem Einsetzen eines Werkzeugs wieder abkühlt, wird zunächst das Werkzeug W radial gespannt und dann bedingt durch die Tatsache, daß sich der Werkzeughalter 6 stärker zusammenzieht als das Anschlagelement 3, gegen die Anschlagfläche 4 gezogen.

Wie bei der zuvor anhand der Figuren 1 bis 3 beschriebenen ersten Ausführungsform ist zwischen dem Werkzeughalter 6 und dem Anschlagelement 3 ein Ringspalt 8 belassen, um die stärkeren radialen Dehnungen des Werkzeughalters 6 bei einer Erwärmung zu kompensieren und so Blockaden zu vermeiden.

## Patentansprüche

1. Spannfutter zum Spannen von Werkzeugen durch Schrumpfsitz mit einem an einer Arbeitsspindel einer Werkzeugmaschine fixierbaren Futterkörper (1), in dem eine zentrale Aufnahme (2) für den Schaft eines zu spannenden Werkzeugs (W) ausgebildet ist, **dadurch gekennzeichnet, daß** der Futterkörper (1) einen die Aufnahme (2) bildenden Werkzeughalter (6) und ein den Werkzeughalter (6) zumindest bereichsweise umgebendes und stirnseitig eine Anlagefläche (4) für das Werkzeug (W) aufweisendes Anschlagelement (3) umfaßt, wobei der Werkzeughalter (6) und das Anschlagelement (3) in axialem Abstand von der Anlagefläche (4) miteinander verbunden sind und zumindest zum Teil aus Materialien mit unterschiedlichen Wärmeausdehnungskoeffizienten bestehen derart, daß bei einer Temperaturänderung, welche zu einer Aufweitung der Aufnahme (2) führt, der Werkzeughalter (6) stärker als das Anschlagelement (3) gedehnt wird.

2. Spannfutter nach Anspruch 1, **dadurch gekennzeichnet, daß** das Material des Werkzeughalters (6) zumindest bereichsweise einen größeren Wärmeausdehnungskoeffizienten als das Material des Anschlagelements (3) besitzt.

3. Spannfutter nach Anspruch 2, **dadurch gekennzeichnet, daß** der Werkzeughalter (6) und das Anschlagelement (3) aus Metall bestehen.

4. Spannfutter nach Anspruch 3, **dadurch gekennzeichnet, daß** der Werkzeughalter (6) im wesentlichen aus Aluminium und das Anschlagelement (3) im wesentlichen aus Stahl besteht.

5. Spannfutter nach einem der vorherigen Ansprüche, **dadurch gekennzeichnet, daß** das Anschlagelement (3) einen mit der Arbeitsspindel verbindbaren Grundkörper bildet.

6. Spannfutter nach Anspruch 5, **dadurch gekennzeichnet, daß** der Werkzeughalter (6) in das Anschlagelement (3) von der die Anlagefläche (4) aufweisenden Stirnseite her eingesetzt ist.

7. Spannfutter nach Anspruch 6, **dadurch gekennzeichnet, daß** der Werkzeughalter (6) in das Anschlagelement (3) eingeschraubt ist.

8. Spannfutter nach einem der Ansprüche 5 bis 7, **dadurch gekennzeichnet, daß** der Werkzeughalter (6) axial unterteilt ist und ein die Aufnahme (2) bildendes erstes Element (6a) aus einem Material, das im wesentlichen den gleichen Wärmeausdehnungskoeffizienten wie das Material des Anschlagelements (3) besitzt, und ein damit verbundenes zweites Element (6b), dessen Wärmeausdehnungskoeffizient größer als der des Anschlagelements (3) ist, umfaßt.

9. Spannfutter nach Anspruch 8, **dadurch gekennzeichnet, daß** das Anschlagelement (3) und das erste Element (6a) des Werkzeughalters (6) aus Stahl und das zweite Element (6b) des Werkzeughalters (6) aus Aluminium bestehen.

10. Spannfutter nach einem der Ansprüche 1 bis 4, **dadurch gekennzeichnet, daß** der Werkzeughalter (6) einen mit der Arbeitsspindel verbindbaren Grundkörper bildet.

11. Spannfutter nach Anspruch 10, **dadurch gekennzeichnet, daß** das Anschlagelement (3) auf den Werkzeughalter (6) aufnahmeseitig aufgeschoben ist.

12. Spannfutter nach Anspruch 10 oder 11, **dadurch gekennzeichnet, daß** das Anschlagelement (3) mit dem Werkzeughalter (6) verlötet oder verschraubt ist.

13. Spannfutter nach einem der vorherigen Ansprüche, **dadurch gekennzeichnet, daß** zwischen Anschlagelement (3) und Werkzeughalter (6) zumindest bereichsweise ein Dehnspalt (8) vorgesehen ist, in welchen das sich stärker dehnende Material des Werkzeughalters (6) bei einer temperaturbedingten Aufweitung der Aufnahme (2) ausweichen kann.

14. Spannfutter nach einem der vorherigen Ansprüche, **dadurch gekennzeichnet, daß** der Werkzeughalter (6) und das Anschlagelement (3) derart zueinander positioniert und dimensioniert sind, daß die Stirnfläche der Aufnahme (2) im Spannzustand hinter der Anlagefläche (4) des Anschlagelements (3) zurücksteht und im Werkzeugwechselzustand, in dem die Aufnahme aufgeweitet ist, über die Anlagefläche (4) hinaus steht.

## Claims

1. A chuck to clamp tools by means of shrink-fitting, comprising a chuck structure (1) affixable to a machine tool's spindle, a central seat (2) being present in said structure to receive the shank of a tool (W) to be clamped,
**characterized in that**
the chuck structure (1) comprises a tool holder (6) subtending the seat (2) and a stop which at least in some zones encloses the tool holder (6) and which is fitted at its end face with a rest surface (4) for the tool (W), the tool holder (6) and the stop (3) being mutually joined axially away from the rest surface (4) and consist at least in part of materials exhibiting different coefficients of thermal expansion in such a way that upon a change in temperature entailing expansion of the seat (2), the tool holder (6) shall expand more than the stop (3).

2. Shuck as claimed in claim 1, **characterized in that** the material of the tool holder (6) exhibits a coefficient of thermal expansion which at least in some zones is larger than that of the material of the stop (3).

3. Chuck as claimed in claim 2, **characterized in that** both the tool holder (6) and the stop (3) are metallic.

4. Chuck as claimed in claim 3, **characterized in that** the tool holder (6) consists substantially of aluminum and the stop (3) substantially of steel.

5. Chuck as claimed in one of the above claims, **characterized in that** the stop (3) constitutes a basic body connectable to the work spindle.

6. Chuck as claimed in claim 5, **characterized in that** the tool holder (6) is inserted from the end face comprising the rest surface (4) into the stop (3).

7. Chuck as claimed in claim 6, **characterized in that** the tool holder (6) is screwed into the stop (3).

8. Chuck as claimed in one of claims 5 through 7, **characterized in that** the tool holder (6) is divided into axial segments and comprises a first segment (6a) constituting the seat (2) and made of a material of the same coefficient of thermal expansion as that of the stop (3) and a second segment (6b) which is joined to the said first segment of which the coefficient of thermal expansion is larger than that of the stop (3).

9. Chuck as claimed in claim 8, **characterized in that** the stop (3) and the first segment (6a) of the tool holder (6) are made of steel and the second segment (6b) of the tool holder (6) is made of aluminum.

10. Chuck as claimed in one of claims 1 through 4, **characterized in that** the tool holder (6) constitutes a basic body connectable to the work spindle.

11. Chuck as claimed in claim 10, **characterized in that** the stop (3) is slipped at the receiving side onto the tool holder (6).

12. Chuck as claimed in either of claims 10 and 11, **characterized in that** the stop (3) is soldered onto or screwed into the tool holder (6).

13. Chuck as claimed in one of the above claims, **characterized in that** an expansion gap (8) is present at least in some zones between the stop (3) and the tool holder (6) to allow access into it by the more expansible material of the tool holder (6) when the seat (2) expands thermally.

14. Chuck as claimed in one of the above claims, **characterized in that** the tool holder (6) and the stop (3) are so mutually configured and dimensioned that the end face of the seat (2), during the clamping mode, will be to the rear of the rest surface (4) of the stop (3) and, during the tool exchange mode, wherein the seat has expanded, will project beyond the rest surface (4).

## Revendications

1. Mandrin pour serrer des outils par rétrécissement avec un corps de mandrin (1) pouvant être fixé sur une broche d'une machine outil, dans lequel mandrin est formée une réception centrale (2) pour la tige d'un outil (W) à serrer, **caractérisé en ce que** le corps de mandrin (1) comprend un support d'outil (6) formant la réception (2) et un élément de butée (3) entourant au moins par zones le support d'outil (6) et présentant sur le côté frontal, une surface d'appui (4) pour l'outil (W); le support d'outil (6) et l'élément de butée (3) étant reliés entre eux à une distance axiale de la surface d'appui (4) et étant formés au moins en partie de matériaux avec un coéfficient de dilatation thermique différent de telle sorte que lors d'un changement de température conduisant à une élargissement de la réception (2), le support d'outil (6) est dilaté plus fortement que l'élément de butée (3).

2. Mandrin selon la revendication 1, **caractérisé en ce que** le matériau du support d'outil (6) comprend au moins par zones, un coéfficient de dilatation thermique supérieur à celui du matériau de l'élément de butée (3).

3. Mandrin selon la revendication 2, **caractérisé en ce que** le support d'outil (6) et l'élément de butée (3) sont en métal.

4. Mandrin selon la revendication 3, **caractérisé en ce que** le support d'outil (6) est essentiellement en aluminium et **en ce que** l'élément de butée (3) est essentiellement en acier.

5. Mandrin selon une des revendications précédentes, **caractérisé en ce que** l'élément de butée (3) forme un corps de base susceptible d'être lié avec la broche de travail.

6. Mandrin selon la revendication 5, **caractérisé en ce que** le support d'outil (6) est introduit dans l'élément de butée (3) par le côté frontal présentant la surface d'appui (4).

7. Mandrin selon la revendication 6, **caractérisé en ce que** le support d'outil (6) est vissé dans l'élément de butée (3).

8. Mandrin selon une des revendications 5 à 7, **caractérisé en ce que** le support d'outil (6) est divisée de manière axiale et comprend un premier élément formant la réception (2) qui comporte essentiellement le même coéfficient de dilatation thermique que le matériau de l'élément de butée (3) et comprend un deuxième élément (6b) relié au premier dont le coéfficient de dilatation thermique est supérieur à celui de l'élément de butée (3).

9. Mandrin selon la revendication 8, **caractérisé en ce que** l'élément de butée (3) et le premier élément (6a) du support d'outil (6) est en acier et le deuxième élément (6b) du support d'outil (6) en aluminium.

10. Mandrin selon une des revendications 1 à 4, **caractérisé en ce que** le support d'outil (6) forme un corps de base relié avec la broche de travail.

11. Mandrin selon la revendication 10, **caractérisé en ce que** l'élément de butée (3) est poussé sur le support d'outil (6) du côté de la réception.

12. Mandrin selon la revendication 10 ou 11, **caractérisé en ce que** l'élément de butée (3) est soudé avec le support d'outil (6) ou vissé.

13. Mandrin selon une des revendications précédentes, **caractérisé en ce qu'**entre l'élément de butée (3) et le support d'outil (6), il est prévu au moins par zone, une fente de dilatation (8) dans laquelle le matériau du support d'outil (6) se dilatant de manière plus forte peut aller lors d'un élargissement thermique de la réception (2) .

14. Mandrin selon une des revendications précédentes, **caractérisé en ce que** le support d'outil (6) et l'élément de butée (3) sont positionnés et dimensionnés l'un par rapport à l'autre de manière telle que la surface frontale de la réception (2) est décalée en arrière en état de serrage derrière la surface d'appui (4) de l'élément de butée (3) et fait saillie au-dessus de la surface d'appui (4) en état de changement d'outil, dans lequel état la réception est agrandie.
